Europäisches Patentamt

European Patent Office

Office européen des brevets

(11) Veröffentlichungsnummer : **0 047 933**
**B1**

(12) **EUROPÄISCHE PATENTSCHRIFT**

(45) Veröffentlichungstag der Patentschrift :
**19.12.84**

(51) Int. Cl.³ : **F 16 H 55/12**

(21) Anmeldenummer : **81106963.2**

(22) Anmeldetag : **04.09.81**

(54) Verfahren zur Herstellung eines geteilten aussenverzahnten Stirnrades und zur Montage desselben auf einer Welle.

(30) Priorität : **15.09.80 DE 3034761**

(43) Veröffentlichungstag der Anmeldung :
**24.03.82 Patentblatt 82/12**

(45) Bekanntmachung des Hinweises auf die Patenterteilung : **19.12.84 Patentblatt 84/51**

(84) Benannte Vertragsstaaten :
**CH FR GB LI SE**

(56) Entgegenhaltungen :
**DE-B- 1 216 654**
**DE-C- 370 560**
**FR-A- 1 266 423**
**FR-A- 1 266 423**
**JP-U-51 123 452**
**US-A- 975 743**
**US-A- 1 165 560**
**US-A- 1 678 582**
**US-A- 2 111 088**
**US-A- 3 225 616**

(73) Patentinhaber : **KRAFTWERK UNION AKTIENGE-
SELLSCHAFT**
**Wiesenstrasse 35**
**D-4330 Mülheim (Ruhr) (DE)**

(72) Erfinder : **Maghon, Helmut, Dipl.-Math.**
**Stockweg 61**
**D-4330 Mülheim (Ruhr) (DE)**

(74) Vertreter : **Mehl, Ernst, Dipl.-Ing. et al**
**Postfach 22 01 76**
**D-8000 München 22 (DE)**

Jouve, 18, rue St-Denis, 75001 Paris, France

EP 0 047 933 B1

**Beschreibung**

Die Erfindung bezieht sich auf ein Verfahren zur Herstellung eines geteilten außenverzahnten Stirnrades und Montage desselben auf einer Welle, gemäß Oberbegriff des Anspruchs 1.

Ein solches Verfahren ist durch die US-A-975 743 im wesentlichen bekannt, wenn man berücksichtigt, daß dort nicht das gesamte Stirnrad, sondern nur der Radkranz geteilt ausgeführt ist, welch letzterer dann auf einen ungeteilten Radkörper aufgebracht wird. Die einzelnen Ringsegmente sind mit Hilfe von achsparallel angeordneten Schraubenbolzen kraftschlüssig miteinander verbunden. Als Verbindung zwischen Radkranz und Radkörper ist eine formschlüssige Verbindung in Form von axialen Verdrehsicherungsbolzen oder -stiften vorgesehen, deren Bohrungen z. Teil im Radkranz und zum Teil im Radkörper verlaufen. Zusätzlich sind die Sitzflächen zwischen den Zahnringen und dem Radkörper gegensinnig zur Mitte hin konisch geneigt, wobei aufgrund der Konizität durch die axialen Verbindungsbolzen auch eine in radialer Richtung wirkende Anpreßkraft erzeugt wird. Diese hat in Umfangsrichtung wirkende Reibungsgegenkräfte gegen ein Verdrehen des Radkranzes relativ zum Radkörper zur Folge, die jedoch nicht so groß werden können, daß die axialen Verdrehsicherungsbolzen entfallen könnten. Da der Zahnkranz nicht als in sich geschlossener Ring ausgebildet ist, sondern aus mehreren Ringsegmenten zusammengesetzt ist, würden durch eine höhere in Umfangsrichtung wirkende Kraft Teilungsfehler der Verzahnung entstehen, welche sich bei einer dort nicht dargestellten Schrägverzahnung noch stärker auswirken würden. Aus den genannten Gründen könnte die aufwendige form- und kraftschlüssige Verbindung zwischen Zahnkranz und Radkörper bei der bekannten Anordnung auch nicht ohne weiteres durch eine einfache Schrumpfverbindung ersetzt werden.

Der Erfindung liegt die Aufgabe zugrunde, ein Verfahren zur Herstellung und Montage eines geteilten außenverzahnten Stirnrades der im Oberbegriff des Anspruchs 1 definierten Art anzugeben, bei welchem das Stirnrad über der Welle zusammengebaut und aufgeschrumpft werden kann, ohne daß hierbei Teilungsfehler der Verzahnung entstehen.

Durch die US-A-1 678 582 ist zwar ein Verfahren zur Herstellung und Montage eines geteilten außenverzahnten, und zwar schrägverzahnten, Stirnrades bekannt, welches durch mehrere achsnormale Trennflächen in ein Doppelpaar von Zahnringen unterteilt ist. Dabei sind jedoch die Zahnringe selbst in Umfangsrichtung nicht unterteilt, so daß dieses bekannte mehrfach axial unterteilte Zahnrad auch nicht auf einer Welle montiert werden kann. Demgegenüber geht es bei der vorliegenden Erfindung auch und gerade um die Unterteilung der einzelnen Zahnringe in Umfangsrichtung mittels im Bereich des Zahngrundes verlaufender Trennfugen.

Ausgehend von einem Verfahren gemäß Oberbegriff des Anspruchs 1 wird die gestellte Aufgabe erfindungsgemäß durch die im Kennzeichen des Anspruchs 1 angegebenen Schritte gelöst. In den Ansprüchen 2 und 3 sind Weiterbildungen des Verfahrens nach der Erfindung angegeben.

Die mit der Erfindung erzielbaren Vorteile sind vor allem darin zu sehen, daß die Gefahr von Teilungsfehlern durch die Wahl von formschlüssigen Verbindungselementen für die Verbindung der Ringsegmente wesentlich reduziert ist und daß durch das Aufschrumpfen des vormontierten Stirnrades auf einen Hilfsdorn die gleichen Bedingungen wie beim Einbau simuliert werden können, d. h., die beim Aufschrumpfen auf die Welle an sich möglichen Teilungsfehler werden bereits beim Herstellen der Außenverzahnung kompensiert. Die erzielbare Genauigkeit ist so gut, daß auch das Herstellen einer Schrägverzahnung gemäß Anspruch 3 unproblematisch ist. Durch das stirnseitige Überdrehen des auf den Hilfsdorn aufgeschrumpften Stirnrades vor dem Herstellen der Außenverzahnung erreicht man, daß sich eine Referenzfläche für die Laufkontrolle des Stirnrades bei der Montage ergibt.

Ein nach dem erfindungsgemäßen Verfahren hergestelltes Stirnrad ist als Ersatz für ein einteiliges Stirnrad vorgesehen, welches auf den Kupplungsflansch eines von einer Gasturbinenanlage angetriebenen Generators aufgeschrumpft ist und die Hauptölpumpe antreibt. Durch die Verwendung eines mehrteiligen Ersatz-Stirnrades, das über der Welle zusammengebaut werden kann, entfällt der bisher beim Auswechseln eines Stirnrades erforderliche Ausbau des Läufers. Somit ergibt sich neben einer beträchtlichen Verringerung der Ausfallzeiten auch eine Kostenersparnis.

Das Verfahren nach der Erfindung wird im folgenden anhand eines in der Zeichnung dargestellten Ausführungsbeispiels näher erläutert. Darin zeigt :

Figur 1 ein aus vier Ringsegmenten zusammengefügtes Stirnrad mit einer schrägen Außenverzahnung in der Draufsicht,

Figur 2 einen Schnitt gemäß der Linie II-II der Fig. 1,

Figur 3 eine Draufsicht auf die Außenverzahnung im Bereich einer Trennfuge zwischen zwei Ringsegmenten und die

Figuren 4 bis 6 die Verbindung der Ringsegmente durch Kegelstifte nach dem Einpressen der Kegelstifte, im Anlieferungszustand zur Montage und im Einbauzustand.

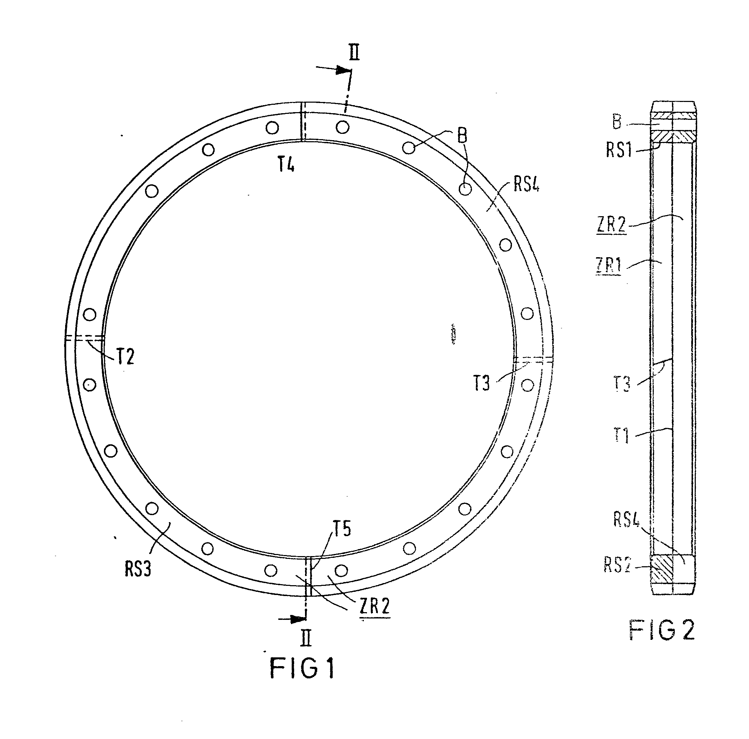

Die Fig. 1 und 2 zeigen in der Draufsicht bzw. im Schnitt ein Stirnrad mit einer schrägen Außenverzahnung nach DIN 867 und folgenden Abmessungen bzw. Kenndaten der Verzahnung :

| | |
|---|---|
| Zähnezahl | = 82 |
| Normalmodul | = 6 |

| | |
|---|---|
| Teilkreisdurchmesser | = 510,46 mm |
| Schrägungswinkel | = 15° 27′ 14,6″ rechtssteigend |
| Kopfkreisdurchmesser | = 522,5 mm |
| Innendurchmesser | = 440,1 mm |
| Radbreite | = 50 mm |

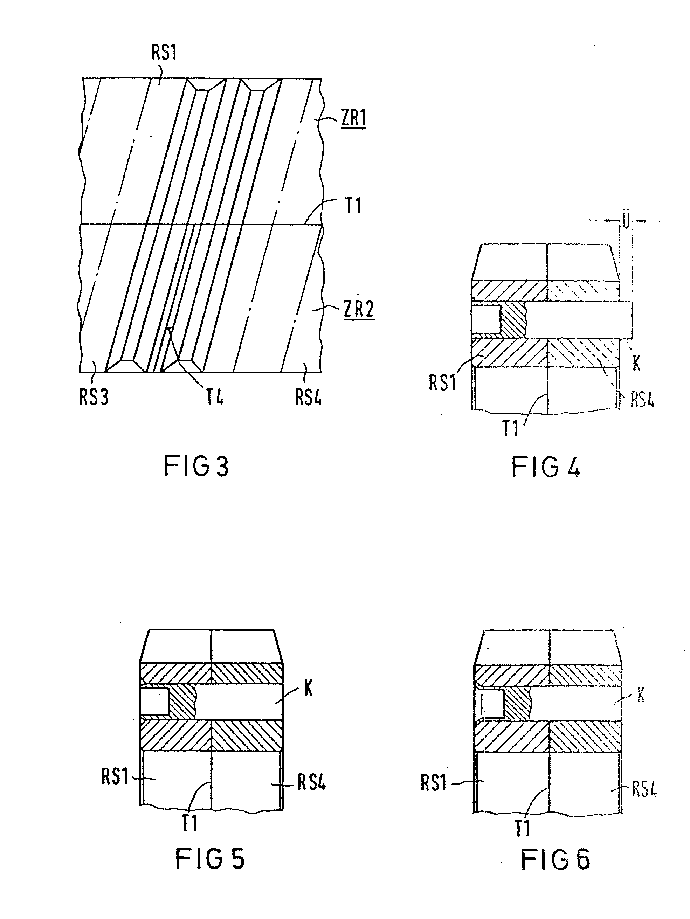

Das Stirnrad ist durch eine achsnormale Trennfläche T1 in zwei Zahnringe ZR1 und ZR2 unterteilt, wobei beide Zahnringe ZR1 und ZR2 die gleiche axiale Breite aufweisen. Der Zahnring ZR1 ist seinerseits durch Trennfugen T2 und T3 in Ringsegmente RS1 und RS2 unterteilt. In entsprechender Weise ist der Zahnring ZR2 durch Trennfugen T4 und T5 in Ringsegmente RS3 und RS4 unterteilt. Die Trennfugen T2, T3, T4 und T5 verlaufen hierbei jeweils zwischen zwei Zähnen im Bereich des Zahngrundes, d. h. sie weisen die gleichen Schrägungswinkel wie die Verzahnung auf. Dieser Verlauf ist für die Trennfuge T4 aus der Draufsicht der Fig. 3 ersichtlich. Die zwischen den Ringsegmenten RS3 und RS4 des Zahnringes ZR2 gebildete Trennfuge T4 verläuft genau zwischen zwei benachbarten Zähnen in der Mitte des Zahngrundes und endet an der achsnormalen Trennfläche T1. Das Ringsegment RS1 des Zahnringes ZR1 ist im Bereich der Trennfuge T4 nicht geteilt und kann somit die in diesem Bereich im Umfangsrichtung wirkenden Kräfte sicher aufnehmen.

Um eine möglichst gleichmäßige Verteilung der im Betrieb wirkenden Fliehkräfte auf den Umfang des Stirnrades zu erreichen, sind die Trennfugen T2, T3, T4 und T5 — soweit dies die vorgegebene Zahnteilung zuläßt — in Umfangsrichtung gleichmäßig versetzt zueinander angeordnet. Die Trennfugen T2 und T4 sowie T3 und T5 sind hierbei um jeweils zwanzig Zähne zueinander versetzt angeordnet, während die Trennfugen T2 und T5 sowie T3 und T4 um jeweils einundzwanzig Zähne zueinander versetzt angeordnet sind. Dies bedeutet andererseits, daß die Ringsegmente RS1, RS2, RS3 und RS4 jeweils einundvierzig Zähne besitzen.

Zur Verbindung der einzelnen Ringsegmente RS1, RS2, RS3 und RS4 sind im Bereich zwischen dem Innendurchmesser des Stirnrades und dem Fußkreis der Verzahnung insgesamt zwanzig gleichmäßig auf den Umfang verteilte achsparallele Bohrungen B vorgesehen, welche zusammen gebohrt und mit einer Kegelreibahle aufgerieben werden und zur Aufnahme von Kegelstiften K vorgesehen sind. Diese Kegelstifte K werden jeweils mit einer definierten Einpreßkraft zwischen 40 000 und 45 000 N ohne Gleitmittel in die Bohrungen B eingepreßt, wobei gemäß Fig. 4 jeweils am Ende mit dem größeren Durchmesser der Kegelstifte K ein über die Stirnfläche des Stirnrades hinausragender Überstand Ü verbleibt. Diese Überstände Ü werden dann abgedreht, so daß gemäß Fig. 5 bei der Anlieferung des Stirnrades zur Montage das Ende mit dem größeren Durchmesser der Kegelstifte K bündig mit der entsprechenden Stirnfläche des Stirnrades abschließt. Bei der Montage des Stirnrades werden dann gemäß Fig. 6 die Kegelstifte K mit Hilfe einer Vorrichtung wieder bündig eingepreßt, so daß beim Zusammenbau des Stirnrades wieder die gleichen Bedingungen vorliegen. Fig. 6 zeigt auch die Sicherung der Kegelstifte K, die an ihrem kleinen Durchmesser hohlgebohrt sind und mit Hilfe einer Vorrichtung aufgeweitet werden.

Bei der Herstellung des vorstehend geschilderten Stirnrades werden zunächst die Ringsegmente RS1, RS2, RS3 und RS4 als zahnlose Segmente hergestellt und durch das Einpressen der Kegelstifte K miteinander verbunden. Danach wird der zusammengebaute Radkörper auf einen Dorn mit einem Außendurchmesser von 440,35 mm aufgeschrumpft, worauf die schräge Außenverzahnung gefräst wird. Auf diese Weise können beim Aufschrumpfen des Stirnrades auf die Welle bei der Montage keine Teilungsfehler entstehen, da bei der Herstellung der Verzahnung und im Einbauzustand jeweils die gleichen Bedingungen herrschen. Solange das Stirnrad auf den Dorn aufgeschrumpft ist, wird auch mindestens eine Stirnfläche überdreht, so daß bei der Montage für die Laufkontrolle eine Referenzfläche vorhanden ist.

Für die Montage des Stirnrades sind folgende Schritte erforderlich :

a) Kontrolle der Wellensitzfläche. Zulässige Abweichung 0,02 mm.

b) Durchmesser der Wellensitzfläche an vier gleichmäßig am Umfang verteilten Stellen ausmessen und Istmaß als Durchschnitt ermitteln. Zulässige Abweichung zwischen Größt- und Kleinstmaß 0,02 mm.

c) Bei Bedarf Innendurchmesser des Stirnrades nacharbeiten. Erforderliches Schrumpfmaß 0,25-0,29 mm.

d) Stirnrad mit Vorrichtung zerlegen. Die Verwendung von Schlagwerkzeugen ist unzulässig.

e) Stirnrad über der Welle zusammenbauen. Kegelstifte ohne Gleitmittel einsetzen und mit Vorrichtung möglichst bündig einpressen. Kontrolle mit Haarlineal. Die Verwendung von Schlagwerkzeugen ist unzulässig. Zulässiger Vorsprung 0,03 mm.

f) Kegelstifte am kleinen Durchmesser mit Vorrichtung sichern.

g) Stirnrad gleichmäßig auf 150 °C anwärmen und aufschrumpfen.

h) Rund- und Stirnlaufkontrolle. Zulässige Abweichung 0,02 mm.

**Ansprüche**

1. Verfahren zur Herstellung eines geteilten außenverzahnten Stirnrades und Montage desselben auf

**0 047 933**

einer Welle, welches durch mindestens eine achsnormale Trennfläche in Zahnringe unterteilt ist, wobei jeder Zahnring durch im Bereich des Zahngrundes verlaufende Trennfugen in mindestens zwei Ringsegmente unterteilt ist, wobei die Trennfugen der Zahnringe in Umfangsrichtung versetzt zueinander zugeordnet sind und wobei die Zahnringe durch achsparallel angeordnete Verbindungselemente formschlüssig miteinander verbunden sind, gekennzeichnet durch folgende Schritte :

a) das Stirnrad wird aus unverzahnten Ringsegmenten (RS1, RS2, RS3, RS4) mit den formschlüssigen Verbindungselementen zusammengesetzt und auf einen Hilfsdorn aufgeschrumpft,

b) die Außenverzahnung wird hergestellt,

c) das Stirnrad wird zerlegt, auf der für den Betrieb vorgesehenen Welle zusammengesetzt und auf der Sitzfläche der Welle aufgeschrumpft.

2. Verfahren nach Anspruch 1, dadurch gekennzeichnet, daß das auf den Hilfsdorn aufgeschrumpfte Stirnrad vor dem Herstellen der Außenverzahnung stirnseitig überdreht wird.

3. Verfahren nach Anspruch 1 oder 2, gekennzeichnet durch die Anwendung auf geteilte Stirnräder mit schräger Außenverzahnung.

### Claims

1. A method for the production of a divided, externally toothed spur wheel and for mounting the latter on a shaft, the spur wheel being divided into toothed rings by at least one separating surface which is normal relative to the axis, wherein each toothed ring is divided into at least two ring segments by separating slits running in the region of the tooth base, wherein the separating slits of the toothed rings are staggered in relation to one another in the peripheral direction, and wherein the toothed rings are mutually connected in form-locking fashion by connecting elements which are arranged parallel to the axis, characterised by the following steps :

a) the spur wheel is made up from untoothed ring segments (RS1, RS2, RS3, RS4) having the form-locking connecting elements and is shrink-fitted onto an auxiliary mandrel,

b) the external toothing is produced,

c) the spur wheel is divided, assembled on the shaft provided for driving and shrink-fitted on the seating of the shaft.

2. A method according to Claim 1, characterised in that, prior to the production of the external toothing, the spur wheel, which is shrink-fitted onto the auxiliary mandrel, is turned over at its end face.

3. A method according to Claim 1 or 2, characterised by the application to divided spur wheels having a bevelled external toothing.

### Revendications

1. Procédé de fabrication d'une roue dentée droite divisée à denture extérieure et de montage de cette roue sur un arbre, ladite roue étant subdivisée par au moins une surface de séparation, perpendiculaire à l'axe, en couronnes dentées, dont chacune est subdivisée par des joints de séparation situés dans la zone du fond de dent, en au moins deux segments annulaires, les joints de séparation des couronnes dentées étant disposés en étant décalés les uns par rapport aux autres suivant la direction périphérique et les couronnes dentées étant reliées entre elles selon une liaison par formes complémentaires par des organes de liaison parallèles à l'axe, caractérisé par les phases opératoires suivantes :

a) on monte la roue dentée droite par assemblage des segments annulaires non dentés (RS1, RS2, RS3, RS4) avec des organes réalisant une liaison par formes complémentaires, et on la fixe par frettage sur un mandrin auxiliaire,

b) on fabrique la denture extérieure,

c) on subdivise la roue dentée droite, on la monte sur l'arbre prévu pour le fonctionnement et on la fixe par frettage sur la surface d'appui de l'arbre.

2. Procédé suivant la revendication 1, caractérisé par le fait qu'on réalise un finissage au tour sur le côté frontal de la roue dentée droite fixée par frettage sur le mandrin auxiliaire, avant la fabrication de la denture extérieure.

3. Procédé suivant la revendication 1 ou 2, caractérisé par son application à des roues dentées droites divisées possédant une denture extérieure hélicoïdale.

4

FIG 1

FIG 2

1

RS1

ZR1

T1

ZR2

RS3          T4          RS4

**FIG 3**

U

RS1          K

T1          RS4

**FIG 4**

K

RS1          RS4

T1

**FIG 5**

K

RS1          RS4

T1

**FIG 6**